# EUROPÄISCHE PATENTSCHRIFT

(11) **EP 3 613 316 B1**
(45) Veröffentlichungstag und Bekanntmachung des Hinweises auf die Patenterteilung: **15.11.2023**
(21) Anmeldenummer: 19192123.8
(22) Anmeldetag: 16.08.2019
(51) Int. Cl.: A47J 31/40, A47J 31/60

(54) **GERÄT ZUR ZUBEREITUNG VON BABY- ODER KLEINKINDNAHRUNG**
DEVICE FOR PREPARING FOOD FOR BABIES OR TODDLERS
DISPOSITIF DE PRÉPARATION DE LA NOURRITURE POUR BÉBÉ OU PETIT ENFANT

(30) Priorität: 20.08.2018 DE 102018120247
(43) Veröffentlichungstag der Anmeldung: 26.02.2020
(73) Patentinhaber: Will, Manuel, 72793 Pfullingen (DE)
(72) Erfinder: Will, Manuel, 72793 Pfullingen (DE)
(74) Vertreter: DREISS Patentanwälte PartG mbB

(56) Entgegenhaltungen:
- WO-A1-2005/120313
- WO-A1-2008/120197
- US-A1- 2016 353 917

## Beschreibung

Die Erfindung betrifft ein Gerät zur Zubereitung von Baby-oder Kleinkindnahrung, mit einem Wasserbehälter oder einem Wasseranschluss, mit einer Pumpvorrichtung, mit einer Heizeinrichtung zur Erhitzung von Wasser und/oder zur Erzeugung von Wasserdampf, mit einer Reinigungseinrichtung zum Reinigen eines Fläschchens zur Aufnahme der Baby- oder Kleinkindnahrung mittels erhitzten Wassers und/oder Wasserdampfs, und mit einer Befülleinrichtung zum Befüllen des Fläschchens mit der Baby- oder Kleinkindnahrung, insbesondere mit erwärmtem Wasser und einem Nahrungszusatz, insbesondere Milchpulver.

Ein derartiges Gerät ist beispielsweise bekannt aus WO 2007/135611 oder aus WO 2005/120313. Die meisten handelsüblichen Geräte hingegen haben keine Reinigungsfunktion. Der Begriff "Reinigungseinrichtung" bzw. "Reinigen" eines Fläschchens oder sonstigen Behältnisses zur Aufnahme von Baby- oder Kleinkindnahrung ist dahingehend zu verstehen, dass das Fläschchen oder Behältnis innen und/oder außen mittels erhitzen Wassers und/oder Wasserdampfs beaufschlagt wird. Somit erfasst der Begriff Reinigen auch Dampfsterilisieren. Mit dem Begriff "Fläschchen" wird vorliegend ein Behältnis verstanden, in welches die Baby- oder Kleinkindnahrung mittels des Geräts eingegeben wird. Eine bestimmte Form wird indessen mit diesem Begriff jedenfalls nicht limitierend intendiert. Das Behältnis kann typischerweise aber nicht notwendigerweise mit einem Sauger versehen werden, mittels dessen das Baby oder Kleinkind die Nahrung aus dem Behältnis aufnehmen kann.

Aus WO 2008/120197 A1 ist vorbekannt ein Gerät zur Zubereitung von Baby- oder Kleinkindnahrung, mit einem Wasserbehälter oder einem Wasseranschluss, mit einer Pumpvorrichtung, mit einer Heizeinrichtung zur Erhitzung von Wasser und/oder zur Erzeugung von Wasserdampf, mit einer Reinigungseinrichtung zum Reinigen eines Fläschchens zur Aufnahme der Baby- oder Kleinkindnahrung mittels erhitzten Wassers und/oder Wasserdampfs, und mit einer Befülleinrichtung zum Befüllen des Fläschchens mit der Baby- oder Kleinkindnahrung, insbesondere mit erwärmtem Wasser und einem Nahrungszusatz, insbesondere Milchpulver, wobei das Fläschchen an eine Haltevorrichtung des Geräts koppelbar ist, welche das Fläschchen beim Reinigen und beim Befüllen hält. Die Haltevorrichtung des vorbekannten Geräts ist in einer unteren Prozesskammer des Geräts karussellartig vorgesehen und weist steg- bzw. clipartige Haltemittel auf, in welche ein Benutzer ein betreffendes Fläschchen einsetzt. Diese Haltevorrichtung mit dem daran gekoppelten Fläschchen ist dabei zum Reinigen des Fläschchens in einer ersten Orientierung in einer Reinigungsstation in dem Gerät anordenbar ist und diese Haltevorrichtung mit dem daran gekoppelten Fläschchen ist zum Befüllen des Fläschchens in einer zweiten Orientierung in einer Befüllstation an dem Gerät anordenbar ist. Die Haltevorrichtung mit dem daran gekoppelten Fläschchen ist im an das Gerät angeordneten Zustand durch einen motorisch unterstützten Stellmechanismus von der ersten Orientierung in der Reinigungsstation in die zweite Orientierung in der Befüllstation bringbar. Ein zu reinigendes und zu befüllendes Fläschchen wird also vom Benutzer unmittelbar ergriffen und in das Gerät eingesetzt. Nach der Reinigung und Befüllung wird das Fläschchen wiederum vom Benutzer unmittelbar ergriffen, um es im befüllten Zustand aus dem Gerät zu entnehmen. Die gehäusefeste Halteeinrichtung für das Fläschchen dient also nicht der Handhabung des Fläschchens.

Der vorliegenden Erfindung liegt die Aufgabe zugrunde, ein Gerät der eingangs genannten Art dahingehend weiter zu bilden, dass eine hygienische und betriebssichere Befüllung eines Fläschchens mit Baby- oder Kleinkindnahrung auf bedienungsfreundliche Weise ausführbar ist.

Diese Aufgabe wird erfindungsgemäß gelöst durch ein Gerät mit den Merkmalen des Anspruchs 1.

Erfindungsgemäß wird also vorgeschlagen, eine Haltevorrichtung für das Fläschchen vorzusehen, welche das Fläschchen aufnimmt und mittels derer das Fläschchen auch gehandhabt wird. Das Fläschchen wird also in die Aufnahmekammer der Haltevorrichtung eingegeben und ist dann sowohl beim Reinigen als auch beim Befüllen in der Aufnahmekammer innerhalb der Haltevorrichtung aufgenommen. Sodann wird die Haltevorrichtung mitsamt dem daran gekoppelten Fläschchen in der Reinigungsstation bzw. in der Befüllstation des Geräts angeordnet bzw. aus der Reinigungsstation in die Befüllstation verbracht. Dabei wird nicht allein das Fläschchen, sondern die gesamte Haltevorrichtung für das Fläschchen unterschiedlich orientiert. Die Haltevorrichtung wird in ihrer ersten Orientierung in der Reinigungsstation an dem Gerät angeordnet, und sie wird in ihrer zweiten Orientierung in der Befüllstation an dem Gerät angeordnet.

Hierfür könnte die Haltevorrichtung manuell in an sich beliebiger Weise ergriffen und gehandhabt werden. Vorzugsweise weist die Haltevorrichtung hierfür aber ein manuell greifbares Griffteil auf, welches insbesondere einen langgestreckten ungefähr vertikal orientierten Handgriff aufweist, der aber auch eine geschlossene Grifföffnung begrenzen kann.

Ausgehend von einem von dem Gerät abgelösten bzw. abgenommenen Zustand der Haltevorrichtung für das Fläschchen wird die Haltevorrichtung mitsamt dem daran gekoppelten Fläschchen ergriffen und an dem Gerät in der ersten Orientierung in der Reinigungsstation oder in der zweiten Orientierung in der Befüllstation angeordnet für eine bestimmungsgemäß auszuführende Reinigungsfunktion oder Befüllfunktion. Nach der ersten Variante der Erfindung wird das Fläschchen ausgehend von der ersten Orientierung in der Befüllstation an dem Gerät manuell ergriffen und von dem Gerät abgenommen und in die zweite Orientierung in der Befüllstation gebracht und wieder an dem Gerät angeordnet. Nach der zweiten Variante der Erfindung ist hierfür ein am Gerät ausgebildeter Stellmechanismus vorgesehen. Beispielsweise kann es sich als vorteilhaft erweisen, wenn die Haltevorrichtung mit dem daran gekoppelten Fläschchen von der ersten Orientierung in der Reinigungsstation in die zweite Orientierung in der Befüllstation schwenkbar und gegebenenfalls zusätzlich translatorisch verlagerbar ist. Solchenfalls ist also ein Schwenkmechanismus als Stellmechanismus bei dem Gerät vorgesehen. Gegebenenfalls ist zusätzlich ein translatorischer Stellmechanismus, etwa in Form einer Schiebesitzführung, für die Haltevorrichtung vorgesehen.

Hinsichtlich der Anordnung von Reinigungsstation und Befüllstation können sich verschiedene Realisierungen als vorteilhaft erweisen. So ist es denkbar, dass die Reinigungsstation in einem Bereich des Geräts oberhalb der Befüllstation angeordnet ist oder dass die Reinigungsstation in einem Bereich des Geräts unterhalb der Befüllstation angeordnet ist oder dass die Reinigungsstation horizontal versetzt zur Befüllstation angeordnet ist oder dass die Reinigungsstation und die Befüllstation im selben räumlichen Bereich des Geräts angeordnet sind, wobei sie sich durch die unterschiedliche Orientierung der Haltevorrichtung unterscheiden. Wenn beispielsweise die Reinigungsstation oberhalb der Befüllstation angeordnet und ausgebildet ist, so erweist sich dies als vorteilhaft, weil dann für die Reinigung benutztes erhitztes Wasser oder kondensierter Wasserdampf der Schwerkraft folgend aus der Haltevorrichtung, wo sie das Fläschchen beaufschlagen, in einen unteren Bereich des Geräts, insbesondere in einen dort angeordneten Flüssigkeitssammelbehälter, ablaufen kann. Es wird bevorzugt, dass die Reinigungsstation in einem oberen Bereich des Geräts und die Befüllstation in einem unteren Bereich des Geräts angeordnet ist. Reinigungsstation und Befüllstation müssen dabei nicht notwendigerweise vertikal übereinander angeordnet sein, sondern eine versetzte Anordnung erweist sich als vorteilhaft, da solchenfalls unterhalb der Reinigungsstation Mittel zur Abführung von zur Reinigung verwandten Wassers vorgesehen werden können.

Es wird weiter vorgeschlagen, das Gerät und die Haltevorrichtung so auszubilden, dass das Fläschchen in der ersten Orientierung der Haltevorrichtung in der Reinigungsstation mit seiner Öffnung nach unten weist und in der zweiten Orientierung der Haltevorrichtung in der Befüllstation mit seiner Öffnung nach oben weist. Dies bedeutet nicht zwingend, dass das Fläschchen mit seiner Längsmittelachse exakt vertikal orientiert sein muss, obschon dies bevorzugt ist. Es kommt vielmehr darauf an, dass in das Fläschchen eingespritztes erhitztes Wasser und/oder Wasserdampf der Schwerkraft folgend nach unten auslaufen kann, wenn das Fläschchen mit seiner Öffnung nach unten weist. Dementsprechend ist das Fläschchen in der Befüllstation nicht oder nur geringfügig geneigt, so dass eingefülltes erwärmtes Wasser mit Nahrungszusatz nicht ausläuft.

Es erweist sich weiter als vorteilhaft, dass die Haltevorrichtung im Inneren der Aufnahmekammer ausgebildete Positioniermittel für das Fläschchen aufweist, welche das Fläschchen verliersicher und unabhängig von der Orientierung der Haltevorrichtung in einer bestimmungsgemäßen Position innerhalb der Aufnahmekammer halten. Derartige Positioniermittel können Klipse, Klammern, federnde Bügel oder sonstige leicht handhabbare Positioniermittel umfassen, welche das Fläschchen in einer bestimmungsgemäßen Position im Innern der Aufnahmekammer der Haltevorrichtung halten, und zwar unabhängig von der im Zuge der Handhabung der Haltevorrichtung sich ändernden Orientierung der Haltevorrichtung. Die bestimmungsgemäße Position des Fläschchens innerhalb der Haltevorrichtung soll also beim bestimmungsgemäßen Gebrauch durch die Haltevorrichtung vorgegeben und unveränderlich bleiben.

Es wäre grundsätzlich denkbar, dass die Haltevorrichtung eine einseitig offene Einsetzöffnung für das Fläschchen aufweist. Beispielsweise könnte die Einsetzöffnung zugleich eine Schnittstelle zu dem Gerät in der Reinigungsstation und/oder in der Befüllstation bilden. Es erweist sich aber auch als vorteilhaft, wenn die Haltevorrichtung ein die Aufnahmekammer begrenzendes Deckelteil oder Wandungsteil aufweist, welches abnehmbar oder aufschwenkbar ist, um das Fläschchen in die Aufnahmekammer einzusetzen oder aus der Aufnahmekammer zu entnehmen. Dies eröffnet die Möglichkeit, die Aufnahmekammer weitestgehend nach außen abzuschließen, was insbesondere beim Reinigungsbetrieb vorteilhaft ist, wenn mit Wasserdampf gearbeitet wird. Hierdurch kann vermieden werden, dass Wasserdampf unkontrolliert aus der Haltevorrichtung nach außen tritt, was Verletzungsgefahr mit sich bringen würde.

Weiter wird vorgeschlagen, dass die Haltevorrichtung in der ersten Orientierung in der Reinigungsstation mittels eines lösbaren Verbindungsmechanismus an dem Gerät anordenbar ist, wobei der Verbindungsmechanismus einen Bajonettverschlussmechanismus, einen Klemmmechanismus oder einen schnappenden, rastenden oder in sonstiger Weise hintergreifenden und wieder freigebbaren Mechanismus umfasst. Auf diese Weise ist die Haltevorrichtung durch intuitiv zu bedienende Mittel an dem Gerät anordenbar. Vorzugsweise wird durch diesen Verbindungsmechanismus zugleich eine Betriebskopplung der Haltevorrichtung mit der Reinigungseinrichtung und deren Komponenten zur Einleitung erhitzten Wassers und/oder Wasserdampfs in die Aufnahmekammer und/oder in das Innere des Fläschchens herbeigeführt.

Weiter erweist es sich als vorteilhaft, dass das Fläschchen im an die Haltevorrichtung gekoppelten Zustand mit seiner Öffnung nach außerhalb der Haltevorrichtung mündet, so dass eine Düse der Reinigungseinrichtung unmittelbar einen Innenraum des Fläschchens beaufschlagen kann. Dies eröffnet weiter die Möglichkeit, dass in der Befüllstation erwärmtes Wasser und Nahrungszusatz über eine Zuführleitung der Befülleinrichtung unmittelbar in den Innenraum des Fläschchens eingebracht werden kann.

Die Aufnahmekammer der Haltevorrichtung könnte spezifisch nur zur Aufnahme des Fläschchens oder gegebenenfalls auch mehrerer Fläschchen ausgebildet sein. Nach einem weiteren Gedanken von besonderer Bedeutung wird vorgeschlagen, dass die Aufnahmekammer der Haltevorrichtung einen zusätzlichen Aufnahmeraum für einen weiteren Gegenstand, insbesondere für für einen Sauger eines Fläschchens aufweist. Auf diese Weise kann während eines Reinigungsbetriebs nicht nur das Fläschchen, sondern zusätzlich auch ein hiermit zu verwendender Sauger gereinigt werden.

Nach einem weiteren Gedanken von ebenfalls besonderer Bedeutung wird vorgeschlagen, dass die Aufnahmekammer der Haltevorrichtung einen Aufnahmeraum für ein erwärmbares Behältnis mit darin aufgenommener Baby- oder Kleinkindnahrung aufweist und dass das Behältnis mittels erhitzten Wassers und/oder Wasserdampfs erwärmbar ist, wenn die Haltevorrichtung mit dem darin aufgenommenen Behältnis in der ersten Orientierung an dem Gerät angeordnet ist. Nach diesem weiteren Gedanken wird also die Reinigungsstation und die Reinigungseinrichtung des Geräts nicht nur zum Reinigen, sondern auch zum Erwärmen von Baby-oder Kleinkindnahrung verwendet.

Für diesen Fall wird weiter vorgeschlagen, dass das erwärmbare Behältnis in der Aufnahmekammer mit seiner Öffnung bestimmungsgemäß gegensinnig orientiert ist zu einer Orientierung des Fläschchens.

Es wäre weiter denkbar und vorteilhaft, dass eine weitere Haltevorrichtung für ein erwärmbares Behältnis mit darin aufgenommener Baby- oder Kleinkindnahrung vorgesehen ist und dass diese weitere Haltevorrichtung eine Aufnahmekammer bildet, innerhalb derer das Behältnis zum Erwärmen aufgenommen ist, und dass die weitere Haltevorrichtung mit dem darin aufgenommenen Behältnis in einer ersten Orientierung in der Reinigungsstation an dem Gerät anordenbar ist und dass das Behältnis mittels erhitzten Wassers und/oder Wasserdampfs von der Reinigungseinrichtung erwärmbar ist. Die Vorhaltung einer weiteren Haltevorrichtung für solche erwärmbaren Behältnisse mit darin aufgenommener Baby- oder Kleinkindnahrung bietet den Vorteil, dass diese weitere Haltevorrichtung spezifisch für diesen Zweck ausgebildet werden kann. Beispielsweise kann weiter vorgesehen sein, dass die weitere Haltevorrichtung mit dem darin aufgenommenen Behältnis von dem Gerät abnehmbar ist und auf einem Untergrund, insbesondere einer Tischfläche, abstellbar ist und dass die Haltevorrichtung derart ausgebildet ist, dass dann von oben mit einem Besteck durch die Öffnung des Behältnisses hindurch auf die darin aufgenommene Baby- oder Kleinkindnahrung zugegriffen werden kann. Beispielsweise kann die weitere Haltevorrichtung mit einem aufschwenkbaren oder nach oben abnehmbaren Deckel ausgebildet sein, um dann Zugriff zu dem erwärmten Behältnis nehmen zu können, ohne dieses erst aus der Haltevorrichtung herausnehmen zu müssen.

Das erfindungsgemäße Gerät kann auch bestimmungsgemäß so ausgebildet werden, dass damit Baby- oder Kleinkindnahrung, insbesondere Gemüse, durch Dampfgaren erwärmt werden kann, indem diese Nahrung unmittelbar, also ohne ein weiteres Behältnis zu erfordern, in die Aufnahmekammer der Haltevorrichtung für das Fläschchen eingegeben wird, die für diese Anwendung vorzugsweise einen Aufnahmeraum zur Verfügung stellt. Es kann sich aber auch als vorteilhaft erweisen, dass für diesen Zweck eine weitere Haltevorrichtung für zu erwärmende Baby- oder Kleinkindnahrungsmittel, insbesondere durch Dampfgaren, vorgesehen ist und dass diese Haltevorrichtung eine Aufnahmekammer für die Baby- oder Kleinkindnahrung bildet, und dass die Haltevorrichtung mit der darin aufgenommenen Baby- oder Kleinkindnahrung in einer ersten Orientierung in der Reinigungsstation an dem Gerät anordenbar ist und dass die Baby- oder Kleinkindnahrung mittels erhitzten Wassers und/oder Wasserdampfs von der Reinigungseinrichtung erwärmbar ist.

Vorzugsweise wird die Reinigungseinrichtung so ausgebildet, dass der Innenraum des Fläschchens und zusätzlich eine Außenseite des Fläschchens mit erhitztem Wasser und/oder Wasserdampf beaufschlagbar sind. Hierfür umfasst die Reinigungseinrichtung vorzugsweise eine erste Düse, die in den Innenraum des Fläschchens gerichtet ist und eine zweite Düse, die außerhalb des Fläschchens die Aufnahmekammer der Haltevorrichtung beaufschlagt.

Im Hinblick auf die Auslösung der Funktionen Reinigen bzw. Befüllen wird vorgeschlagen, das Gerät so auszubilden, dass Sensoren vorgesehen sind, welche erkennen, ob die Haltevorrichtung bestimmungsgemäß in der Reinigungsstation bzw. bestimmungsgemäß in der Befüllstation orientiert und angeordnet ist, und dass eine elektrische oder elektronische Steuerungseinrichtung vorgesehen ist, welche Signale der Sensoren erhält und verarbeitet und in Abhängigkeit der Signale Betriebsprozesse bei dem Geräts auslöst, insbesondere einen Reinigungsbetrieb auslöst oder ein Fläschchen befüllt, oder Betriebsprozesse verhindert, bestimmungsgemäße Anordnung der Haltevorrichtung in der einen oder anderen Station nicht detektiert werden kann.

Es wäre denkbar, dass verschieden gestaltete Haltevorrichtungen zur Aufnahme von verschiedenen Behältnissen oder Gegenständen vorgesehen werden. Nach einer weiteren Gedanken wird vorgeschlagen, dass die Haltevorrichtung Einsatzteile umfasst, mittels derer nach Art eines Baukastens die Haltevorrichtung und deren Aufnahmekammer gestaltet werden können, um darin unterschiedliche Fläschchen oder sonstige Behältnisse für Baby- oder Kleinkindnahrung oder sonstige erwärmbare Baby-oder Kleinkindnahrung aufnehmen zu können. Dabei erweist sich als vorteilhaft, wenn die Einsatzteile in die Haltevorrichtung einsteckbar sind, also ein variables Stecksystem bilden.

Weiter erweist sich als vorteilhaft, dass die Haltevorrichtung oder ein Einsatzteil der Haltevorrichtung elektrische oder elektronische Kodierungsmittel, insbesondere Widerstände, RFID Chips, umfasst, und dass bei dem Gerät mit den Kodierungsmitteln zusammenwirkende Detektionsmittel vorgesehen sind, so dass detektiert werden kann, ob die Haltevorrichtung ein zu reinigendes Fläschchen oder ein zu erwärmendes Behältnis enthält oder für einen weiteren Zweck ausgebildet ist, insbesondere zum Erwärmen, insbesondere Dampfgaren, von unmittelbar eingebrachten Nahrungsmitteln.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Geräts zur Zubereitung von Baby- oder Kleinkindnahrung. In der Zeichnung zeigt:

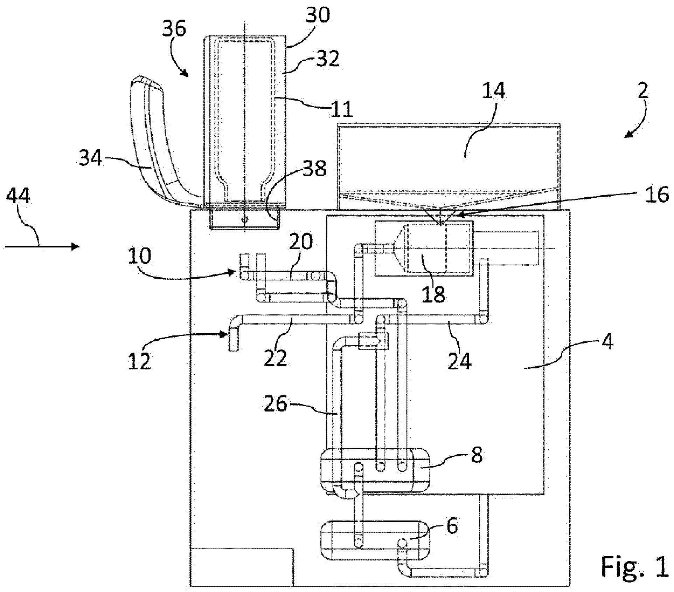

- Figur 1: eine schematische Ansicht eines erfindungsgemäßen Geräts mit einer Haltevorrichtung für ein Fläschchen, wobei sich die Haltevorrichtung in einer ersten Orientierung in einer Reinigungsstation des Geräts befindet;
- Figur 2: eine schematische Ansicht eines erfindungsgemäßen Geräts mit der Haltevorrichtung für ein Fläschchen, wobei sich die Haltevorrichtung in einer zweiten Orientierung in einer Befüllstation des Geräts befindet;
- Figur 3: eine Seitenansicht der Figur 1;
- Figur 4: eine Seitenansicht der Figur 2;
- Figuren 5a, b: eine perspektivische Ansicht der Haltevorrichtung für das Fläschchen in der Befüllstation mit bzw. ohne Deckelteil;
- Figuren 6a,: b eine Schnittansicht der Haltevorrichtung für das Fläschchen in der ersten bzw. zweiten Orientierung;
- Figur 7: eine schematische Darstellung der Haltevorrichtung beim Anordnen in der Reinigungsstation;
- Figur 8: eine Schnittansicht einer weiteren Haltevorrichtung für ein erwärmbares Behältnis mit darin aufgenommener Baby- oder Kleinkindnahrung;
- Figur 9: eine Ansicht des Geräts mit der Haltevorrichtung nach Figur 8;
- Figur 10: eine schematische Darstellung eines Schwenkmechanismus bei einer weiteren Ausführungsform des erfindungsgemäßen Geräts.

Die Figuren zeigen ein insgesamt mit dem Bezugszeichen 2 bezeichnetes Gerät zur Zubereitung von Baby- oder Kleinkindnahrung. Das Gerät 2 umfasst einen Wasserbehälter 4 oder alternativ hierzu einen an die Brauchwasserversorgung anschließbaren Wasseranschluss, eine Pumpvorrichtung 6, eine Heizeinrichtung 8 zur Erhitzung von Wasser und vorzugsweise auch zur Erzeugung von Wasserdampf, eine Reinigungseinrichtung 10 zum Reinigen eines Fläschchens 11 zur Aufnahme der Baby- oder Kleinkindnahrung, und eine Befülleinrichtung 12 zum Befüllen des Fläschchens mit Baby- oder Kleinkindnahrung. Bei dieser Baby- oder Kleinkindnahrung handelt es sich insbesondere um erwärmtes Wasser und einen Nahrungszusatz, insbesondere Milchpulver. Das hier beispielhaft dargestellte Gerät umfasst weiter einen Pulverbehälter 14 zur Aufnahme des Nahrungszusatzes, also insbesondere Milchpulver. Ferner umfasst das Gerät eine Dosiereinrichtung 16 zur Zumessung einer Menge des Milchpulvers und zur Zuführung in eine Mischkammer 18, in der das Milchpulver mit von der Heizeinrichtung 8 zugeführtem erwärmtem Wasser gemischt wird.

Die vorgenannte Reinigungseinrichtung 10 umfasst Leitungsmittel 20, mittels derer durch die Pumpvorrichtung 6 heißes Wasser und/oder Wasserdampf von der Heizeinrichtung 8 zu dem zu reinigenden Fläschchen 11 zugeführt wird. Die Befüllvorrichtung 12 umfasst Leitungsmittel 22, mittels derer im beispielhaft dargestellten Fall ein Gemisch aus erwärmtem Wasser und Milchpulver von der Mischkammer 18 zu einem zu befüllenden Fläschchen 11 zugeführt wird. Das hierfür erforderliche erwärmte Wasser wird zuvor über ein weiteres Leitungsmittel 24 von der Heizeinrichtung 8 zu der Mischkammer 18 geführt, gegebenenfalls gemischt mit nicht erwärmtem Wasser, welches über ein Leitungsmittel 26 zugeführt wird.

Weiter umfasst das Gerät 2 eine Haltevorrichtung 30 für das Fläschchen 11, wobei das Fläschchen 11 an die Haltevorrichtung 30 ankoppelbar ist und die Haltevorrichtung 30 eine Aufnahmekammer 32 für das Fläschchen 11 bildet, was nachfolgend noch im Einzelnen anhand weiterer Figuren dargelegt werden wird. Die Haltevorrichtung 30 ist beispielhaft mittels eines Handgriffs 34 manuell ergreifbar. Sie kann von dem Gerät 2 abgenommen werden. Hiervon ausgehend, wird auf noch zu beschreibende Weise zunächst ein zu reinigendes Fläschchen 11 in der Aufnahmekammer 32 der Haltevorrichtung 30 angeordnet und dort auf noch zu beschreibende Weise in einer Betriebsposition fixiert. Sodann kann die ganze Haltevorrichtung mit dem daran gekoppelten Fläschchen 11 manuell ergriffen werden und in einer ersten Orientierung 36 in einer Reinigungsstation 38 an dem Gerät 2 angeordnet werden. In dieser ersten Orientierung 36 und Anordnung erfolgt dann mittels der Reinigungseinrichtung 10 ein Reinigungsvorgang des innerhalb der Aufnahmekammer 32 der Haltevorrichtung 30 aufgenommenen Fläschchens 11.

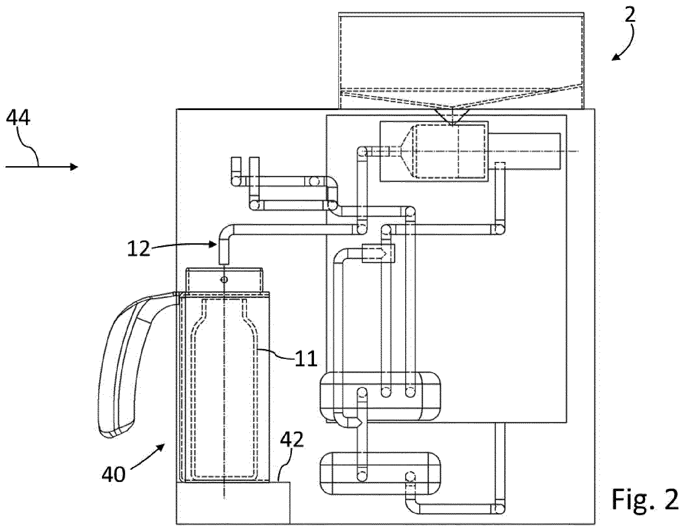

Ausgehend von dieser ersten Orientierung 36 kann die Haltevorrichtung 30 wieder von dem Gerät 2 abgenommen werden und dann in der in Figur 2 dargestellten zweiten Orientierung 40 in einer Befüllstation 42 an dem Gerät angeordnet werden, wo es dann mittels der Befülleinrichtung 12 befüllbar ist.

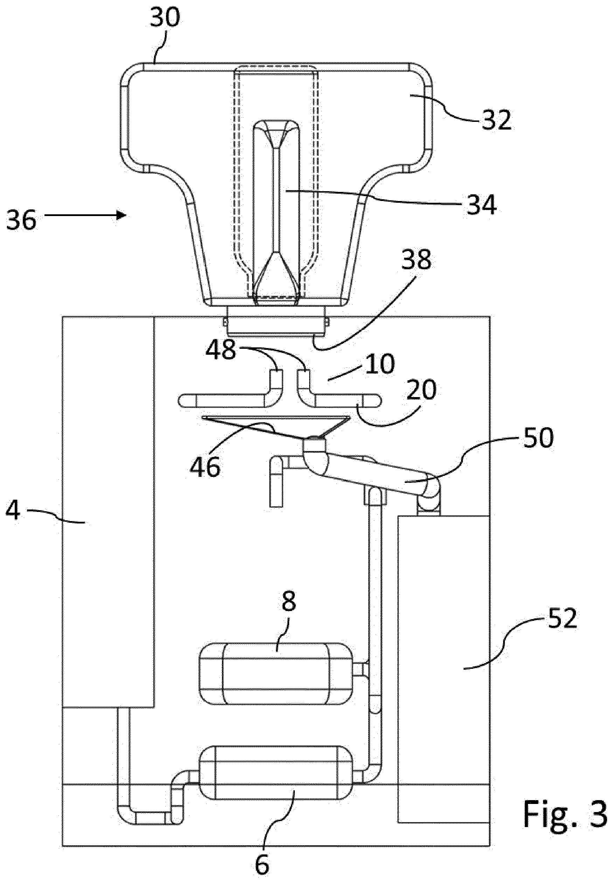

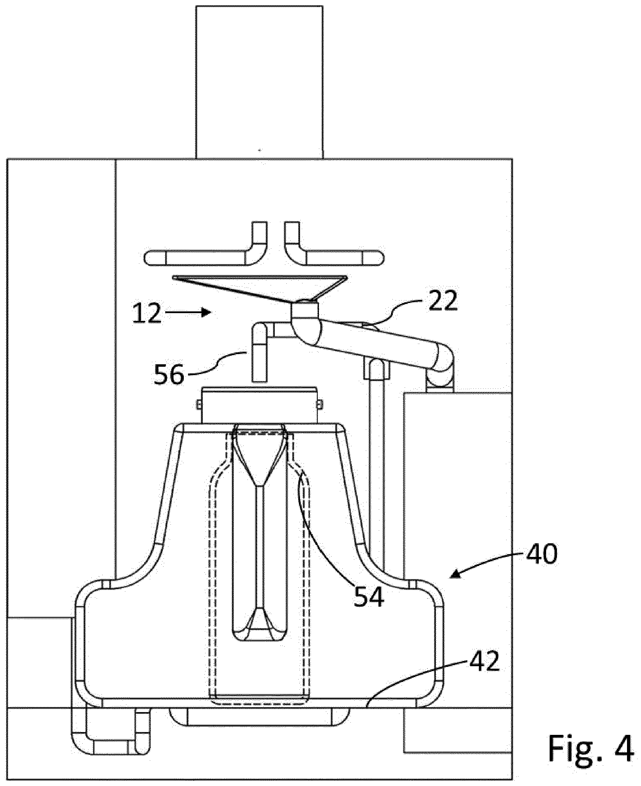

Die Figuren 3 und 4 zeigen das Gerät 2 von der Seite in Richtung der Pfeile 44. Die Reinigungsstation 38 ist in einem oberen Bereich des Geräts 2 angeordnet, und die Befülllstation 42 ist in einem unteren Bereich des Geräts angeordnet. Beispielhaft sind die Stationen oberhalb bzw. unterhalb voneinander angeordnet. In der ersten Orientierung 36 der Haltevorrichtung 30 ist das Fläschchen 11 innerhalb der Aufnahmekammer 32 der Haltevorrichtung 30 im Wesentlichen vertikal orientiert und weist mit seiner Öffnung 54 nach unten. Man erkennt in Figur 3 ein trichterförmiges Auffang- und Abführmittel 46, welches unterhalb der Reinigungsstation 38 bzw. unterhalb der Reinigungseinrichtung 10 angeordnet ist. Wenn über das Leitungsmittel 20 und dessen nur angedeutete Düsen 48 erhitztes Wasser und insbesondere Wasserdampf in das Fläschchen 11 und in die Aufnahmekammer 32 der Haltevorrichtung 30 eingespritzt wird, so wird das Wasser der Schwerkraft folgend nach unten ablaufen; es gelangt dann in das trichterförmige Auffang- und Abführmittel 46 und wird von dort über ein weiteres Leitungsmittel 50 einem Flüssigkeitsauffangbehälter 52 zugeführt und dort gespeichert, bis es verworfen wird.

Figur 4 zeigt die Haltevorrichtung 30 mit dem daran gekoppelten Fläschchen 11 in der Befüllstation 42 in der zweiten Orientierung 40. In dieser zweiten Orientierung 40 der Haltevorrichtung 30 ist das Fläschchen 11 innerhalb der Aufnahmekammer 32 der Haltevorrichtung 30 im Wesentlichen vertikal orientiert und weist mit seiner Öffnung 54 nach oben. Es befindet sich unterhalb der Befülleinrichtung 12, so dass mittels des Leitungsmittels 22 warmes Wasser mit Nahrungszusatz von der Mischkammer 18 einer nur angedeuteten Austrittsdüse 56 zugeführt und von dort in das Innere des Fläschchens 11 eingefüllt werden kann.

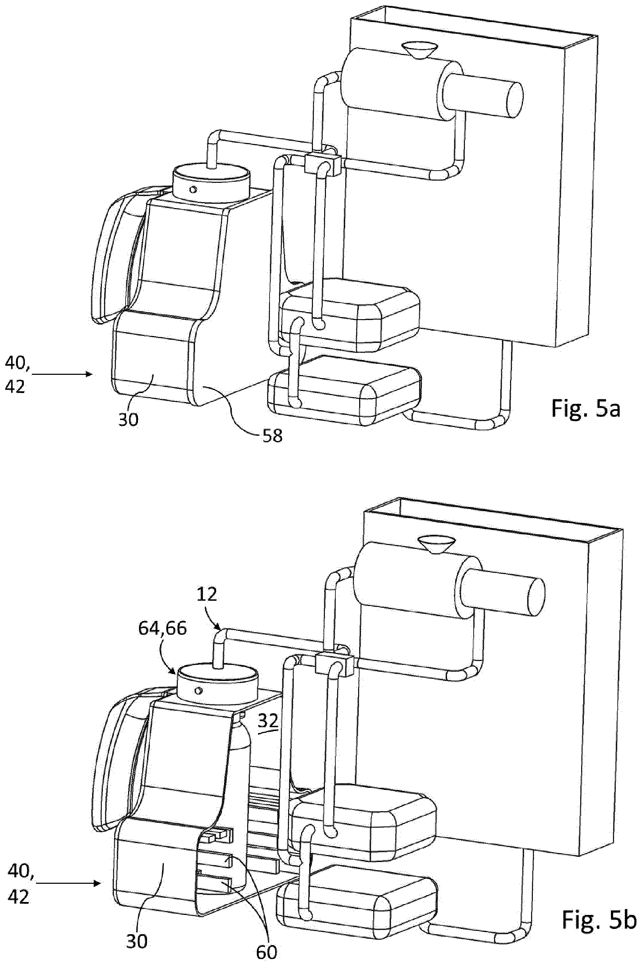

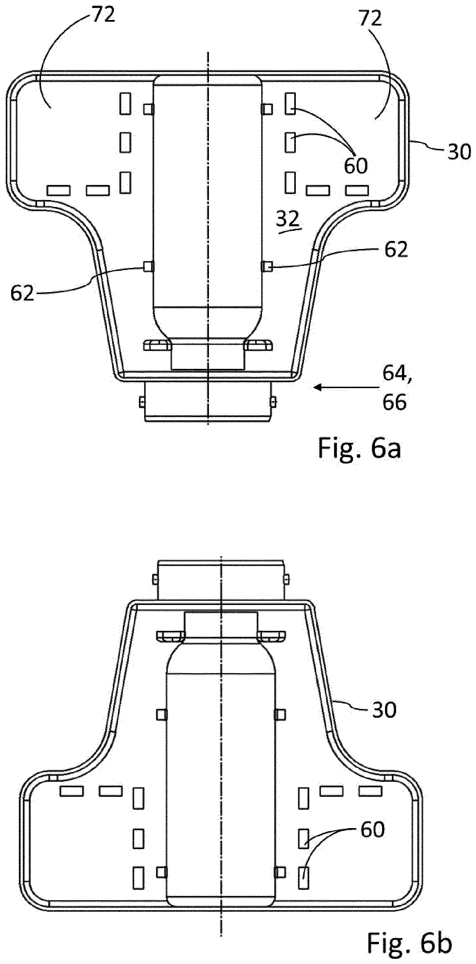

Die folgenden Figuren 5 und 6 zeigen die beispielhafte Ausgestaltung der Haltevorrichtung 30. Die Haltevorrichtung 30 umfasst ein die Aufnahmekammer 32 begrenzendes abnehmbares Deckel- oder Wandungsteil 58, welches im beispielhaft dargestellten Fall einen Zugriff auf die gesamte Erstreckung der Aufnahmekammer 32 gestattet. Die Haltevorrichtung 30 umfasst weiter beispielhaft dargestellte Einsatzteile 60, die vorzugsweise variabel anordenbar, insbesondere einsteckbar sind und so die Aufnahmekammer 32 zur Aufnahme des Fläschchens 11 oder eines weiteren Behältnisses oder weiterer Teile, wie zum Beispiel Sauger, partitionieren können. Weiter sind vorzugsweise Positioniermittel 62 vorgesehen, welche das Fläschchen 11 verliersicher und unabhängig von der Orientierung der Haltevorrichtung 30 in einer bestimmungsgemäßen Position innerhalb der Aufnahmekammer 32 und relativ zur Aufnahmekammer 32 halten. Bei diesen Positioniermitteln 62 kann es sich um federnde Bügel, Klipse oder dergleichen handeln.

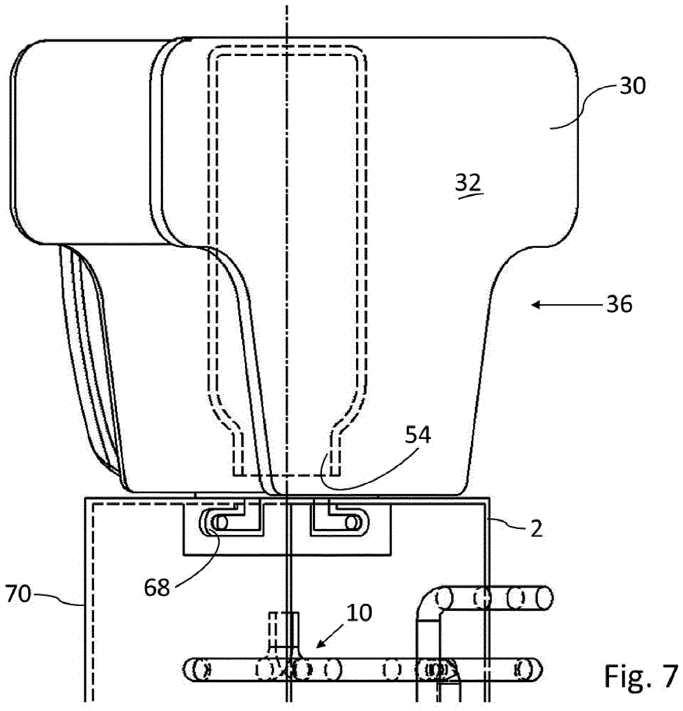

Die Haltevorrichtung 30 für das Fläschchen 11 umfasst einen Verbindungsmechanismus 64, der beispielhaft als Bajonettverschlussmechanismus 66 ausgebildet ist, für die Anordnung der Haltevorrichtung 30 an einem Gerätekörper des Geräts 2. Mittels dieses Bajonettverschlussmechanismus 66 ist die Haltevorrichtung 30 in der Reinigungsstation 38 an dem Gerät 2 in eine bestimmungsgemäße Betriebsverbindung bringbar. Hierfür umfasst das Gerät 2 komplementär ausgebildete Bajonettverschlussmittel 68 am Gerätekörper 70 des Geräts 2, was in Figur 7 angedeutet ist. Figur 7 verdeutlicht, dass die Haltevorrichtung 30 in der zweiten Orientierung 36 von oben mit ihrem Bajonettverschlussmechanismus 66 auf das komplementär ausgebildete Bajonettverschlussmittel 68 am Gerätekörper 70 des Geräts 2 aufsetzbar und dann in die Betriebsstellung verdrehbar ist. Die Aufnahmekammer 32 der Haltevorrichtung 30 mündet durch den Verbindungsmechanismus 64 hindurch nach außen. Wie in Figur 7 angedeutet, weist die Öffnung 54 des Fläschchens 11 innerhalb der Aufnahmekammer 32 nach unten und kommuniziert durch den Verbindungsmechanismus 64 hindurch mit dem Gerät bzw. mit dessen Reinigungseinrichtung 10.

Befindet sich die Haltevorrichtung 30 mit dem daran gekoppelten Fläschchen 11 gemäß Figuren 5a, 5b in der zweiten Orientierung 40 in der Befüllstation 42 gemäß Figuren 5a, b, 6b, so kann die Befülleinrichtung 12 über ihre Austrittsdüse 26 das Fläschchen 11 direkt durch den Bajonettverschlussmechanismus 66 hindurch befüllen. In dieser zweiten Orientierung 40 in der Befüllstation 42 braucht der Verbindungsmechanismus 64 nicht aktiv gekoppelt sein.

Man erkennt außerdem, dass die Aufnahmekammer 32 einen zusätzlichen Aufnahmeraum 72 für weitere Gegenstände, insbesondere einen Sauger des Fläschchens 11, aufweist. Der Aufnahmeraum 72 ist beispielhaft durch die Einsatzteile 60 begrenzt oder variabel begrenzbar.

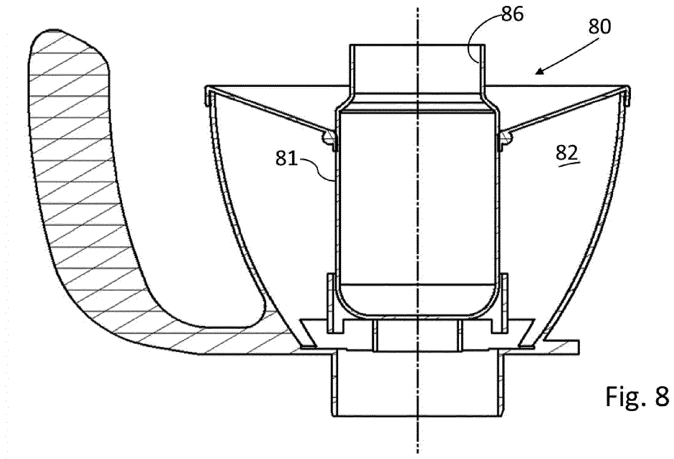

Figur 8 zeigt eine weitere Haltevorrichtung 80 für ein erwärmbares Behältnis 81 mit darin aufgenommener Baby- oder Kleinkindnahrung, häufig auch als Gläschen bezeichnet. Die Haltevorrichtung 80 bildet wiederum eine Aufnahmekammer 82, die spezifisch für die Aufnahme des Behältnisses 81 ausgebildet ist. Auch diese weitere Haltevorrichtung 80 lässt sich in einer ersten Orientierung 84 in der Reinigungsstation 38 des Geräts 2 anordnen. Die weitere Haltevorrichtung 80 weist vorzugsweise denselben

Verbindungsmechanismus 64 wie die Haltevorrichtung 30 auf und ist jedenfalls derart in der Reinigungsstation 38 des Geräts 2 anordenbar, dass mittels der Reinigungseinrichtung 10 erhitztes Wasser und/oder Wasserdampf in die Aufnahmekammer 82 eingeleitet werden kann. Hierdurch lässt sich das mit Baby- oder Kleinkindnahrung befüllte Behältnis 81 samt Inhalt erwärmen.

Es wäre aber auch denkbar, dass die Haltevorrichtung 30 für das Fläschchen 11 so ausgebildet ist oder insbesondere durch Einsatzteile 60 so ausgebildet werden kann, dass sie zur Aufnahme eines mit Baby- oder Kleinkindnahrung befüllten Behältnisses 81 dienen kann. Die weitere Haltevorrichtung 80 oder die entsprechend ausgebildete Haltevorrichtung 30 sind dann vorzugsweise so ausgebildet, dass ein mit Baby- oder Kleinkindnahrung befülltes zu erwärmendes Behältnis 81 so wie in Figur 8 dargestellt, orientiert ist, so dass das Behältnis mit seiner Öffnung 86 in der jeweiligen ersten Orientierung 84 der Haltevorrichtung 80 nach oben weist. Dies eröffnet die Möglichkeit, das Behältnis 81 im geöffneten Zustand zu erwärmen. Ferner kann die so ausgebildete Halteeinrichtung 30 bzw. 80 dann von dem Gerät 2 abgenommen werden und auf einer Unterlage, insbesondere einem Tisch platziert werden, so dass mittels eines Bestecks direkt Zugriff zu dem erwärmten Behältnis 81 mit Baby- oder Kleinkindnahrung genommen werden kann.

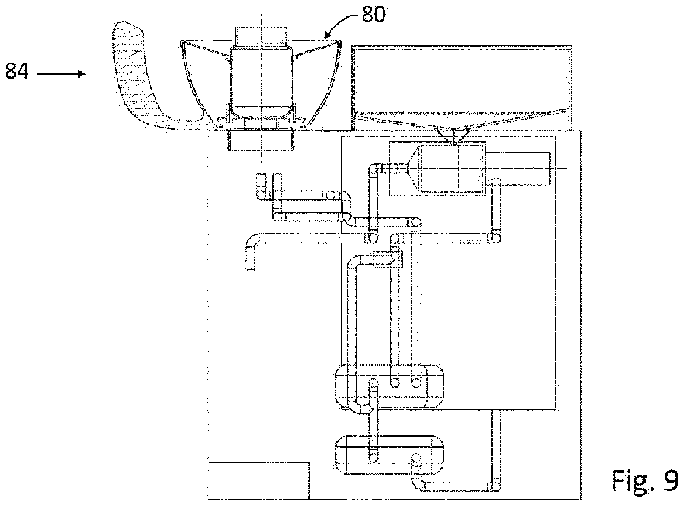

Figur 9 zeigt schließlich die weitere Haltevorrichtung 80 in ihrer ersten Orientierung 84 an dem Gerät 2.

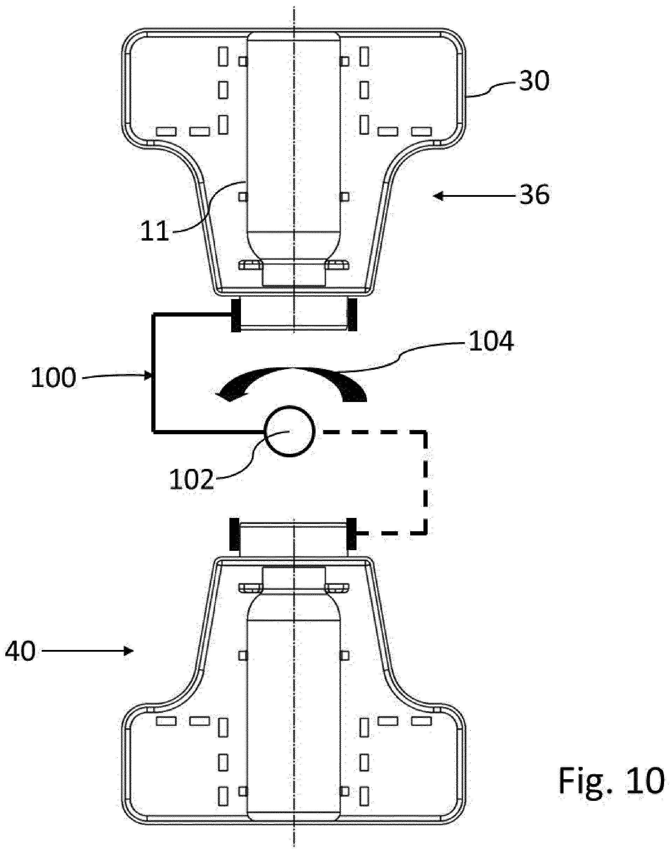

Figur 10 deutet schließlich schematisch eine alternative Ausgestaltung des erfindungsgemäßen Geräts an, bei der die Haltevorrichtung 30 zur Aufnahme des Fläschchens 11 mittels eines mechanischen Stellmechanismus 90 von der ersten Orientierung 36 in der Reinigungsstation 38 in die zweite Orientierung 40 in der Befüllstation 42 gebracht wird. Bei dem Stellmechanismus 90 handelt es sich im beispielhaft dargestellten Fall um einen Schwenkmechanismus, der bezüglich eines Schwenkpunkts 92 in Richtung des Pfeils 94 verschwenkbar ist. Dies kann manuell unterstützt oder auch motorisch unterstützt realisiert werden.

## Patentansprüche

1. Gerät (2) zur Zubereitung von Baby- oder Kleinkindnahrung, mit einem Wasserbehälter (4) oder einem Wasseranschluss, mit einer Pumpvorrichtung (6), mit einer Heizeinrichtung (8) zur Erhitzung von Wasser und/oder zur Erzeugung von Wasserdampf, mit einer Reinigungseinrichtung (10) zum Reinigen eines Fläschchens (11) zur Aufnahme der Baby- oder Kleinkindnahrung mittels erhitzten Wassers und/oder Wasserdampfs, und mit einer Befülleinrichtung (12) zum Befüllen des Fläschchens (11) mit der Baby- oder Kleinkindnahrung, insbesondere mit erwärmtem Wasser und einem Nahrungszusatz, insbesondere Milchpulver, wobei das Fläschchen (11) an eine Haltevorrichtung (30) des Geräts (2) koppelbar ist, welche das Fläschchen beim Reinigen und beim Befüllen hält, und wobei diese Haltevorrichtung (30) eine Aufnahmekammer (32) bildet, innerhalb derer das Fläschchen (11) beim Reinigen und auch beim Befüllen aufgenommen ist, wobei die Haltevorrichtung (30) mit dem daran gekoppelten Fläschchen (11) zum Reinigen des Fläschchens in einer ersten Orientierung (36) in einer Reinigungsstation (38) an dem Gerät anordenbar ist und wobei die Haltevorrichtung (30) in der ersten Orientierung (36) in der Reinigungsstation (38) mittels eines lösbaren Verbindungsmechanismus (64) an dem Gerät (2) anordenbar ist, wobei der Verbindungsmechanismus (64) einen Bajonettverschlussmechanismus (66), einen Klemmmechanismus oder einen schnappenden, rastenden oder in sonstiger Weise hintergreifenden und wieder freigebbaren Mechanismus umfasst, und wobei die Haltevorrichtung (30) mit dem daran gekoppelten Fläschchen (11) zum Befüllen des Fläschchens in einer zweiten Orientierung (40) in einer Befüllstation (42) an dem Gerät anordenbar ist, und
wobei die Haltevorrichtung (30) mit dem daran gekoppelten Fläschchen (11) durch manuelles Ergreifen der Haltevorrichtung (30) mit dem daran gekoppelten Fläschchen ausgehend von der ersten Orientierung (36) in der Reinigungsstation (38) von dem Gerät abnehmbar und in der zweiten Orientierung (40) in der Befüllstation (42) wieder an dem Gerät anordenbar ist oder
wobei die Haltevorrichtung (30) mit dem daran gekoppelten Fläschchen (11) im an das Gerät angeordneten Zustand manuell unterstützt oder durch einen mechanischen, insbesondere motorisch unterstützten Stellmechanismus (90) von der ersten Orientierung (36) in der Reinigungsstation (38) in die zweite Orientierung (40) in der Befüllstation (42) bringbar ist.

2. Gerät nach Anspruch 1, **dadurch gekennzeichnet, dass** die Haltevorrichtung (30) ein manuell greifbares Griffteil (34) aufweist.

3. Gerät nach Anspruch 1 oder 2, **dadurch gekennzeichnet, dass** die Haltevorrichtung (30) mit dem daran gekoppelten Fläschchen (11) von der ersten Orientierung (36) in der Reinigungsstation (38) in die zweite Orientierung (40) in der Befüllstation (42) schwenkbar und gegebenenfalls zusätzlich translatorisch verlagerbar ist.

4. Gerät nach einem oder mehreren der vorstehenden Ansprüche, **dadurch gekennzeichnet, dass** die Reinigungsstation (38) in einem Bereich des Geräts oberhalb der Befüllstation (42) angeordnet ist oder dass die Reinigungsstation in einem Bereich des Geräts unterhalb der Befüllstation angeordnet ist oder dass die Reinigungsstation horizontal versetzt zur Befüllstation angeordnet ist oder dass die Reinigungsstation und die Befüllstation im selben räumlichen Bereich des Geräts angeordnet sind, wobei sie sich durch die unterschiedliche Orientierung der Haltevorrichtung unterscheiden, insbesondere , das Fläschchen (11) in der ersten Orientierung (36) der Haltevorrichtung (30) in der Reinigungsstation (38) mit seiner Öffnung (54) nach unten weist und in der zweiten Orientierung (40) der Haltevorrichtung (30) in der Befüllstation (42) mit seiner Öffnung (54) nach oben weist.

5. Gerät nach einem oder mehreren der vorstehenden Ansprüche, **dadurch gekennzeichnet, dass** die Haltevorrichtung (30) im Inneren der Aufnahmekammer (32) ausgebildete Positioniermittel (62) für das Fläschchen (11) aufweist, welche das Fläschchen (11) verliersicher und unabhängig von der Orientierung der Haltevorrichtung (30) in einer bestimmungsgemäßen Position innerhalb der Aufnahmekammer (32) halten, und/oder dass die Haltevorrichtung (30) ein die Aufnahmekammer (32) begrenzendes Deckelteil oder Wandungsteil (58) aufweist, welches abnehmbar oder aufschwenkbar ist, um das Fläschchen (11) in die Aufnahmekammer (32) einzusetzen oder aus der Aufnahmekammer zu entnehmen.

6. Gerät nach einem oder mehreren der vorstehenden Ansprüche, **dadurch gekennzeichnet, dass** das Fläschchen (11) im an die Haltevorrichtung (30) gekoppelten Zustand mit seiner Öffnung (54) nach außerhalb der Haltevorrichtung (30) mündet, so dass eine Düse (48) der Reinigungseinrichtung (12) unmittelbar einen Innenraum des Fläschchens (11) beaufschlagen kann.

7. Gerät nach einem oder mehreren der vorstehenden Ansprüche, **dadurch gekennzeichnet, dass** die Aufnahmekammer (32) der Haltevorrichtung (30) einen zusätzlichen Aufnahmeraum für einen weiteren Gegenstand, insbesondere für einen Sauger eines Fläschchens aufweist.

8. Gerät nach einem oder mehreren der vorstehenden Ansprüche, **dadurch gekennzeichnet, dass** die Aufnahmekammer (32) der Haltevorrichtung (30) einen Aufnahmeraum für ein erwärmbares Behältnis (81) mit darin aufgenommener Baby- oder Kleinkindnahrung aufweist und dass das Behältnis (81) mittels erhitzten Wassers und/oder Wasserdampfs erwärmbar ist, wenn die Haltevorrichtung (30) mit dem darin aufgenommenen Behältnis (81) in der ersten Orientierung (36) an dem Gerät angeordnet ist, insbesondere dass das erwärmbare Behältnis (81) in der Aufnahmekammer (32) mit seiner Öffnung bestimmungsgemäß gegensinnig orientiert ist zu einer Orientierung des Fläschchens (11).

9. Gerät nach einem oder mehreren der vorstehenden Ansprüche, **dadurch gekennzeichnet, dass** eine weitere Haltevorrichtung (80) für ein erwärmbares Behältnis (81) mit darin aufgenommener Baby- oder Kleinkindnahrung vorgesehen ist und dass diese Haltevorrichtung (80) eine Aufnahmekammer (82) bildet, innerhalb derer das Behältnis (81) zum Erwärmen aufgenommen ist, und dass die Haltevorrichtung (80) mit dem darin aufgenommenen Behältnis (81) in einer ersten Orientierung (84) in der Reinigungsstation (38) an dem Gerät anordenbar ist und dass das Behältnis (81) mittels erhitzten Wassers und/oder Wasserdampfs von der Reinigungseinrichtung (10) erwärmbar ist, insbesondere dass die weitere Haltevorrichtung (80) mit dem darin aufgenommenen Behältnis (81) von dem Gerät abnehmbar ist und auf einem Untergrund, insbesondere einer Tischfläche, abstellbar ist und die Haltevorrichtung (80) derart ausgebildet ist, dass dann von oben mit einem Besteck durch die Öffnung (86) des Behältnisses (81) hindurch auf die darin aufgenommene Baby- oder Kleinkindnahrung zugegriffen werden kann.

10. Gerät nach einem oder mehreren der vorstehenden Ansprüche 1-8, **dadurch gekennzeichnet, dass** eine weitere Haltevorrichtung (80) für zu erwärmende Baby-oder Kleinkindnahrungsmittel, insbesondere durch Dampfgaren, vorgesehen ist und dass diese Haltevorrichtung (80) eine Aufnahmekammer (82) für die Baby- oder Kleinkindnahrung bildet, und dass die Haltevorrichtung (80) mit der darin aufgenommenen Baby- oder Kleinkindnahrung in einer ersten Orientierung (84) in der Reinigungsstation (38) an dem Gerät anordenbar ist und dass die Baby- oder Kleinkindnahrung mittels erhitzten Wassers und/oder Wasserdampfs von der Reinigungseinrichtung (10) erwärmbar ist.

11. Gerät nach einem oder mehreren der vorstehenden Ansprüche, **dadurch gekennzeichnet, dass** die Reinigungseinrichtung (10) so ausgebildet ist, dass der Innenraum des Fläschchens (11) und zusätzlich eine Außenseite des Fläschchens (11) mit erhitztem Wasser und/oder Wasserdampf beaufschlagbar sind.

12. Gerät nach einem oder mehreren der vorstehenden Ansprüche, **dadurch gekennzeichnet, dass** Sensoren vorgesehen sind, welche erkennen, ob die Haltevorrichtung (30, 80) bestimmungsgemäß in der Reinigungsstation (38) oder bestimmungsgemäß in der Befüllstation (42) orientiert und angeordnet ist, und dass eine elektrische oder elektronische Steuerungseinrichtung vorgesehen ist, welche Signale der Sensoren erhält und verarbeitet und in Abhängigkeit der Signale Betriebsprozesse bei dem Gerät auslöst, insbesondere einen Reinigungsbetrieb auslöst oder ein Fläschchen befüllt, oder Betriebsprozesse verhindert.

13. Gerät nach einem oder mehreren der vorstehenden Ansprüche, **dadurch gekennzeichnet, dass** die Haltevorrichtung (30, 80) Einsatzteile (60) umfasst, mittels derer nach Art eines Baukastens die Haltevorrichtung (30, 82) und deren Aufnahmekammer (32, 82) gestaltet werden können, um darin unterschiedliche Fläschchen (11) oder ein sonstiges Behältnis (81) für Baby- oder Kleinkindnahrung oder sonstige erwärmbare Baby- oder Kleinkindnahrung aufnehmen zu können, insbesondere dass die Einsatzteile (60) in die Haltevorrichtung (30, 80) einsteckbar sind, also ein variables Stecksystem bilden.

14. Gerät nach einem oder mehreren der vorstehenden Ansprüche, **dadurch gekennzeichnet, dass** die Haltevorrichtung (30, 80) oder Einsatzteile (66) der Haltevorrichtung wenigstens ein elektrisches oder elektronisches Kodierungsmittel, insbesondere Widerstände, RFID Chips, umfasst, und dass bei dem Gerät ein mit dem Kodierungsmittel zusammenwirkendes Detektionsmittel vorgesehen sind, so dass detektiert werden kann, ob die Haltevorrichtung (30, 80) ein zu reinigendes Fläschchen (11) oder ein zu erwärmendes Behältnis (81) enthält oder für einen weiteren Zweck ausgebildet ist, insbesondere zum Erwärmen, insbesondere Dampfgaren, von unmittelbar eingebrachten Nahrungsmitteln.

## Claims

1. Appliance (2) for preparing baby or toddler food, comprising a water container (4) or a water connection, comprising a pump device (6), comprising a heating apparatus (8) for heating water and/or for generating water vapour, comprising a cleaning apparatus (10) for cleaning a bottle (11) for receiving the baby or toddler food by means of heated water and/or water vapour, and comprising a filling apparatus (12) for filling the bottle (11) with the baby or toddler food, in particular with heated water and a food supplement, in particular milk powder, wherein the bottle (11) can be coupled to a holding device (30) of the appliance (2) which holds the bottle during cleaning and filling, and wherein said holding device (30) forms a receiving chamber (32) in which the bottle (11) is received during cleaning and also filling, wherein the holding device (30) with the bottle (11) coupled thereto can be arranged in a first orientation (36) in a cleaning station (38) on the appliance in order to clean the bottle and wherein the holding device (30) can be arranged in the first orientation (36) in the cleaning station (38) by means of a releasable connection mechanism (64) on the appliance (2), wherein the connection mechanism (64) comprises a bayonet locking mechanism (66), a clamping mechanism or a snapping, latching or otherwise engaging and then releasable mechanism, and wherein the holding device (30) with the bottle (11) coupled thereto can be arranged in a second orientation (40) in a filling station (42) on the appliance in order to fill the bottle, and
wherein the holding device (30) with the bottle (11) coupled thereto can be taken off the appliance by manually gripping the holding device (30) with the bottle coupled thereto proceeding from the first orientation (36) in the cleaning station (38) and can be arranged on the appliance again in the second orientation (40) in the filling station (42), or
wherein the holding device (30) with the bottle (11) coupled thereto is manually supported in the state arranged on the appliance or can be brought from the first orientation (36) in the cleaning station (38) into the second orientation (40) in the filling station (42) by means of a mechanical, in particular motor-assisted adjusting mechanism (90).

2. Appliance according to claim 1, **characterised in that** the holding device (30) comprises a manually grippable gripping part (34).

3. Appliance according to claim 1 or 2, **characterised in that** the holding device (30) with the bottle (11) coupled thereto can be pivoted and, if applicable, additionally translationally displaced from the first orientation (36) in the cleaning station (38) into the second orientation (40) in the filling station (42).

4. Appliance according to one or more of the preceding claims, **characterised in that** the cleaning station (38) is arranged in a region of the appliance above the filling station (42) or **in that** the cleaning station is arranged in a region of the appliance below the filling station or **in that** the cleaning station is arranged so as to be horizontally offset with respect to the filling station or **in that** the cleaning station and filling station are arranged in the same spatial region of the appliance, wherein they differ on account of the different orientation of the holding device, in particular the bottle (11) points with its opening (54) downwards in the first orientation (36) of the holding device (30) in the cleaning station (38) and points with its opening (54) upwards in the second orientation (40) of the holding device (30) in the filling station (42) .

5. Appliance according to one or more of the preceding claims, **characterised in that** the holding device (30) comprises positioning means (62) for the bottle (11) which are formed within the receiving chamber (32) and which hold the bottle (11) in a captive manner and regardless of the orientation of the holding device (30) in an intended position within the receiving chamber (32), and/or **in that** the holding device (30) comprises a cover part or wall part (58) which delimits the receiving chamber (32) and which can be taken off or swung open in order to insert the bottle (11) into the receiving chamber (32) or remove it from the receiving chamber.

6. Appliance according to one or more of the preceding claims, **characterised in that** the bottle (11) with its opening (54) opens outwards from the holding device (30) in the state coupled to the holding device (30), such that a nozzle (48) of the cleaning apparatus (12) can act directly on an interior of the bottle (11).

7. Appliance according to one or more of the preceding claims, **characterised in that** the receiving chamber (32) of the holding device (30) comprises an additional receiving space for a further object, in particular for a nipple of a bottle.

8. Appliance according to one or more of the preceding claims, **characterised in that** the receiving chamber (32) of the holding device (30) comprises a receiving space for a heatable container (81) with baby or toddler food received therein and **in that** the container (81) can be heated by means of heated water and/or water vapour if the holding device (30) with the container (81) received therein is arranged in the first orientation (36) on the appliance, in particular in that the heatable container (81) in the receiving chamber (32) is oriented, as intended, with its opening in the opposite direction to an orientation of the bottle (11).

9. Appliance according to one or more of the preceding claims, **characterised in that** a further holding device (80) for a heatable container (81) is provided with baby or toddler food received therein and **in that** said holding device (80) forms a receiving chamber (82) inside which the container (81) is received for the heating, and **in that** the holding device (80) with the container (81) received therein can be arranged in a first orientation (84) in the cleaning station (38) on the appliance and **in that** the container (81) can be heated by the cleaning apparatus (10) by means of heated water and/or water vapour, in particular **in that** the further holding device (80) with the container (81) received therein can be taken off the appliance and placed on a surface, in particular a table surface, and the holding device (80) is designed such that the baby or toddler food received in the container (81) can be accessed from above through the opening (86) thereof by means of cutlery.

10. Appliance according to one or more of the preceding claims 1 to 8, **characterised in that** a further holding device (80) is provided for baby or toddler food to be heated, in particular by means of steam cooking, and **in that** said holding device (80) forms a receiving chamber (82) for the baby or toddler food, and **in that** the holding device (80) with the baby or toddler food received therein can be arranged in a first orientation (84) in the cleaning station (38) on the device and **in that** the baby or toddler food can be heated by the cleaning device (10) by means of heated water and/or water vapour.

11. Appliance according to one or more of the preceding claims, **characterised in that** the cleaning apparatus (10) is designed such that heated water and/or water vapour can be applied to the interior of the bottle (11) and additionally an outside of the bottle (11).

12. Appliance according to one or more of the preceding claims, **characterised in that** sensors are provided which recognise whether the holding device (30, 80) is oriented and arranged as intended in the cleaning station (38) or as intended in the filling station (42), and **in that** an electric or electronic control apparatus is provided which receives and processes signals of the sensors and triggers operating processes for the appliance depending on the signals, in particular triggers a cleaning mode or fills a bottle, or prevents operating processes.

13. Appliance according to one or more of the preceding claims, **characterised in that** the holding device (30, 80) comprises insert parts (60) by means of which the holding device (30, 82) and the receiving chambers (32, 82) thereof can be designed in the manner of a modular system in order to be able to receive therein different bottles (11) or another container (81) for baby or toddler food or other heatable baby or toddler food, in particular **in that** the insert parts (60) can be inserted in the holding device (30, 80), thus forming a variable plug-in system.

14. Appliance according to one or more of the preceding claims, **characterised in that** the holding device (30, 80) or insert parts (66) of the holding device comprise at least one electric or electronic coding means, in particular resistors, RFID chips, and **in that** a detection means that cooperates with the coding means is provided for the appliance, such that it can be detected whether the holding device (30, 80) contains a bottle (11) to be cleaned or a container (81) to be heated or is designed for another purpose, in particular for heating, in particular steam cooking, foodstuffs introduced directly.

## Revendications

1. Appareil (2) pour la préparation d'un aliment pour bébé ou petit enfant, avec un récipient d'eau (4) ou un raccordement d'eau, avec un dispositif de pompage (6), avec un système de chauffage (8) pour le chauffage de l'eau et/ou pour la production de vapeur d'eau, avec un système de nettoyage (10) pour le nettoyage d'un biberon (11) pour la réception de l'aliment pour bébé ou petit enfant au moyen de l'eau chauffée et/ou de la vapeur d'eau, et avec un système de remplissage (12) pour le remplissage du biberon (11) avec l'aliment pour bébé ou petit enfant, en particulier avec l'eau réchauffée et un complément alimentaire, en particulier du lait en poudre, dans lequel le biberon (11) peut être accouplé à un dispositif de retenue (30) de l'appareil (2), lequel maintient le biberon lors du nettoyage et lors du remplissage, et dans lequel ce dispositif de retenue (30) forme une chambre de réception (32) à l'intérieur de laquelle le biberon (11) est reçu lors du nettoyage et également lors du remplissage, dans lequel le dispositif de retenue (30) avec le biberon (11) accouplé à celui-ci pour le nettoyage du biberon peut être disposé sur l'appareil dans une première orientation (36) dans un poste de nettoyage (38) et dans lequel le dispositif de retenue (30) peut être disposé sur l'appareil (2) dans la première orientation (36) dans le poste de nettoyage (38) au moyen d'un mécanisme de liaison (64) libérable, dans lequel le mécanisme de liaison (64) comprend un mécanisme de fermeture à baïonnette (66), un mécanisme de serrage ou un mécanisme à déclic, à encliquetage ou venant se bloquer par l'arrière d'une autre manière et pouvant être à nouveau libéré, et dans lequel le dispositif de retenue (30) avec le biberon (11) accouplé à celui-ci pour le remplissage du biberon peut être disposé sur l'appareil dans une deuxième orientation (40) dans un poste de remplissage (42), et
dans lequel le dispositif de retenue (30) avec le biberon (11) accouplé à celui-ci peut être retiré de l'appareil par saisie manuelle du dispositif de retenue (30) avec le biberon accouplé à celui-ci à partir de la première orientation (36) dans le poste de nettoyage (38) et dans la deuxième orientation (40) dans le poste de remplissage (42) peut être à nouveau disposé sur l'appareil ou
dans lequel le dispositif de retenue (30) avec le biberon (11) accouplé à celui-ci dans l'état disposé sur l'appareil est soutenu manuellement ou peut être amené par un mécanisme de réglage (90) mécanique, en particulier soutenu de façon motorisée de la première orientation (36) dans le poste de nettoyage (38) dans la deuxième orientation (40) dans le poste de remplissage (42).

2. Appareil selon la revendication 1, **caractérisé en ce que** le dispositif de retenue (30) présente une partie de préhension (34) pouvant être saisie manuellement.

3. Appareil selon la revendication 1 ou 2, **caractérisé en ce que** le dispositif de retenue (30) avec le biberon (11) accouplé à celui-ci peut pivoter à partir de la première orientation (36) dans le poste de nettoyage (38) dans la deuxième orientation (40) dans le poste de remplissage (42) et éventuellement peut en plus être déplacé en translation.

4. Appareil selon l'une ou plusieurs des revendications précédentes, **caractérisé en ce que** le poste de nettoyage (38) est disposé dans une zone de l'appareil au-dessus du poste de remplissage (42) ou que le poste de nettoyage est disposé dans une zone de l'appareil au-dessous du poste de remplissage ou que le poste de nettoyage est disposé de manière déplacée horizontalement par rapport au poste de remplissage ou que le poste de nettoyage et le poste de remplissage sont disposés dans la même zone spatiale de l'appareil, dans lequel ils se distinguent par l'orientation différente du dispositif de retenue, en particulier, le biberon (11) dans la première orientation (36) du dispositif de retenue (30) dans le poste de nettoyage (38) est dirigé avec son ouverture (54) vers le bas et dans la deuxième orientation (40) du dispositif de retenue (30) dans le poste de remplissage (42) est dirigé avec son ouverture (54) vers le haut.

5. Appareil selon l'une ou plusieurs des revendications précédentes, **caractérisé en ce que** le dispositif de retenue (30) présente des moyens de positionnement (62) réalisés à l'intérieur de la chambre de réception (32) pour le biberon (11), lesquels maintiennent le biberon (11) de manière imperdable et indépendamment de l'orientation du dispositif de retenue (30) dans une position correcte à l'intérieur de la chambre de réception (32), et/ou que le dispositif de retenue (30) présente une partie de couvercle ou partie de paroi (58) délimitant la chambre de réception (32), laquelle est amovible ou pivotante, afin d'insérer le biberon (11) dans la chambre de réception (32) ou de le retirer de la chambre de réception.

6. Appareil selon l'une ou plusieurs des revendications précédentes, **caractérisé en ce que** le biberon (11) dans l'état accouplé au dispositif de retenue (30) débouche avec son ouverture (54) vers l'extérieur du dispositif de retenue (30), de sorte qu'une buse (48) du système de nettoyage (12) peut solliciter directement un espace intérieur du biberon (11).

7. Appareil selon l'une ou plusieurs des revendications précédentes, **caractérisé en ce que** la chambre de réception (32) du dispositif de retenue (30) présente un espace de réception supplémentaire pour un autre objet, en particulier pour une tétine d'un biberon.

8. Appareil selon l'une ou plusieurs des revendications précédentes, **caractérisé en ce que** la chambre de réception (32) du dispositif de retenue (30) présente un espace de réception pour un récipient (81) pouvant être réchauffé avec l'aliment pour bébé ou petit enfant reçu dans celui-ci et que le récipient (81) peut être réchauffé au moyen de l'eau chauffée et/ou de la vapeur d'eau, lorsque le dispositif de retenue (30) avec le récipient (81) reçu dans celui-ci est disposé sur l'appareil dans la première orientation (36), en particulier que le récipient (81) pouvant être réchauffé est orienté dans la chambre de réception (32) avec son ouverture correctement en sens inverse d'une orientation du biberon (11).

9. Appareil selon l'une ou plusieurs des revendications précédentes, **caractérisé en ce qu'**un autre dispositif de retenue (80) pour un récipient (81) pouvant être réchauffé avec l'aliment pour bébé ou petit enfant reçu dans celui-ci est prévu et que ce dispositif de retenue (80) forme une chambre de réception (82) à l'intérieur de laquelle le récipient (81) est reçu pour le réchauffage, et que le dispositif de retenue (80) avec le récipient (81) reçu dans celui-ci peut être disposé sur l'appareil dans une première orientation (84) dans le poste de nettoyage (38) et que le récipient (81) peut être réchauffé au moyen de l'eau chauffée et/ou de la vapeur d'eau du système de nettoyage (10), en particulier que l'autre dispositif de retenue (80) avec le récipient (81) reçu dans celui-ci peut être retiré de l'appareil et peut être posé sur un support, en particulier une surface de table, et le dispositif de retenue (80) est réalisé de telle sorte qu'il est alors possible d'accéder par le haut avec un couvert à l'aliment pour bébé ou petit enfant reçu dans celui-ci à travers l'ouverture (86) du récipient (81).

10. Appareil selon l'une ou plusieurs des revendications précédentes 1-8, **caractérisé en ce qu'**un autre dispositif de retenue (80) pour l'aliment pour bébé ou petit enfant à réchauffer, en particulier par cuisson vapeur, est prévu et que ce dispositif de retenue (80) forme une chambre de réception (82) pour l'aliment pour bébé ou petit enfant, et que le dispositif de retenue (80) avec l'aliment pour bébé ou petit enfant reçu dans celui-ci peut être disposé sur l'appareil dans une première orientation (84) dans le poste de nettoyage (38) et que l'aliment pour bébé ou petit enfant peut être réchauffé au moyen de l'eau chauffée et/ou de la vapeur d'eau du système de nettoyage (10).

11. Appareil selon l'une ou plusieurs des revendications précédentes, **caractérisé en ce que** le système de nettoyage (10) est réalisé de sorte que l'espace intérieur du biberon (11) et en plus une face extérieure du biberon (11) peuvent être sollicités avec l'eau chauffée et/ou la vapeur d'eau.

12. Appareil selon l'une ou plusieurs des revendications précédentes, **caractérisé en ce que** des capteurs sont prévus, lesquels détectent si le dispositif de retenue (30, 80) est orienté et disposé correctement dans le poste de nettoyage (38) ou correctement dans le poste de remplissage (42), et qu'un système de commande électrique ou électronique est prévu, lequel reçoit et traite les signaux des capteurs et en fonction des signaux déclenche des processus de fonctionnement pour l'appareil, en particulier déclenche un fonctionnement de nettoyage ou remplit un biberon, ou empêche des processus de fonctionnement.

13. Appareil selon l'une ou plusieurs des revendications précédentes, **caractérisé en ce que** le dispositif de retenue (30, 80) comprend des pièces d'insertion (60), au moyen desquelles le dispositif de retenue (30, 82) et la chambre de réception (32, 82) de celui-ci peuvent être conçus à la façon d'un kit de construction, afin de pouvoir recevoir dans ceux-ci différents biberons (11) ou un autre récipient (81) pour l'aliment pour bébé ou petit enfant ou un autre aliment pour bébé ou petit enfant pouvant être réchauffé, en particulier que les pièces d'insertion (60) peuvent être enfichées dans le dispositif de retenue (30, 80), par conséquent forment un système d'enfichage variable.

14. Appareil selon l'une ou plusieurs des revendications précédentes, **caractérisé en ce que** le dispositif de retenue (30, 80) ou les pièces d'insertion (66) du dispositif de retenue comprend au moins un moyen de codage électrique ou électronique, en particulier des résistances, des puces RFID, et que pour l'appareil un moyen de détection coopérant avec le moyen de codage sont prévus, de sorte qu'il est possible de détecter si le dispositif de retenue (30, 80) contient un biberon (11) à nettoyer ou un récipient (81) à réchauffer ou est réalisé pour un autre objectif, en particulier pour le réchauffage, en particulier la cuisson vapeur, d'aliments introduits directement.
